Europäisches Patentamt

European Patent Office

Office européen des brevets

(19)

(11) Publication number: **0 225 733 B1**

# EUROPEAN PATENT SPECIFICATION

(12)

(45) Date of publication of patent specification: 25.09.91   (51) Int. Cl.⁵: **G11B 27/036**

(21) Application number: **86308767.2**

(22) Date of filing: **11.11.86**

(54) Magnetic recording apparatus.

(30) Priority: **12.11.85 JP 253080/85**

(43) Date of publication of application:
**16.06.87 Bulletin 87/25**

(45) Publication of the grant of the patent:
**25.09.91 Bulletin 91/39**

(84) Designated Contracting States:
**AT DE ES FR GB NL**

(56) References cited:
**GB-A- 2 065 356**
**US-A- 4 520 405**

**PATENTS ABSTRACTS OF JAPAN, vol. 5, no.
169 (P-86)[841], 28th October 1981; & JP-A-56
98 761 (SONY K.K.) 08-08-1981**

**PATENTS ABSTRACTS OF JAPAN, vol. 7, no.
241 (P-232)[1386], 26th October 1983; & JP-
A-58 128 006 (MATSUSHITA DENKI SANGYO
K.K.) 30-07-1983**

**NEUES AUS DER TECHNIK, no. 3, 1st Novem-
ber 1965, pages 3-4, Würzburg, DE;
"Uberspielen von Bildbandaufzeichnungen"**

**IBM TECHNICAL DISCLOSURE BULLETIN, vol.**

**19, no. 5, October 1976, pages 1606-1607,
New York, US; S.D. CHEATHAM et al.: "Axially
decentered erase head"**

(73) Proprietor: **SONY CORPORATION**
**7-35 Kitashinagawa 6-Chome Shinagawa-ku
Tokyo 141(JP)**

(72) Inventor: **Murakami, Mituaki c/o Sony Corpo-
ration**
**Patents Division 6-7-35 Kitashinagawa
Shinagawa-ku Tokyo 141(JP)**
Inventor: **Ohgawara, Yoshiaki c/o Sony Cor-
poration**
**Patents Division 6-7-35 Kitashinagawa
Shinagawa-ku Tokyo 141(JP)**

(74) Representative: **Cotter, Ivan John et al
D. YOUNG & CO. 10 Staple Inn
London WC1V 7RD(GB)**

## Description

This invention relates to helical scan type video tape recording apparatus.

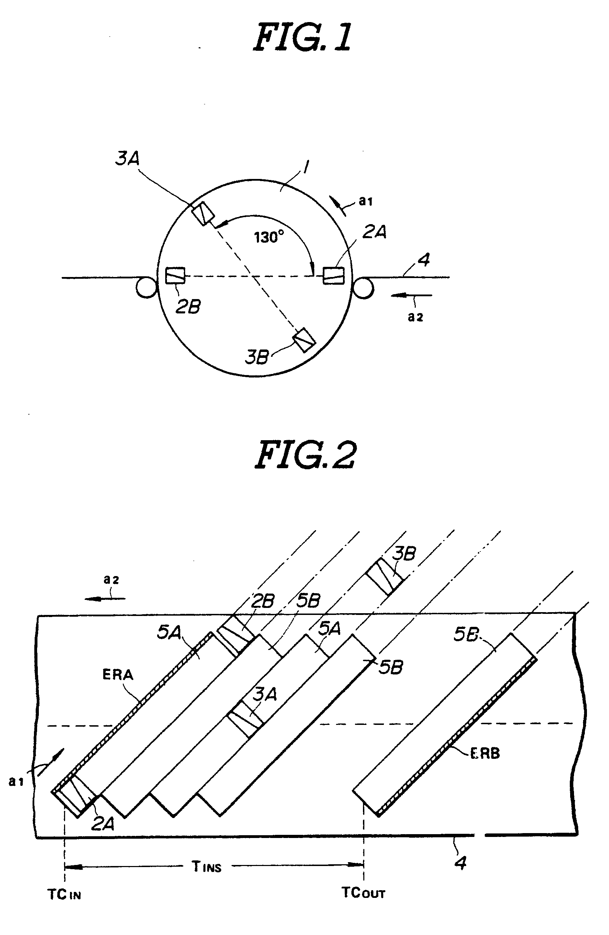

A previously proposed magnetic recording/reproducing apparatus which comprises a rotary erase head and which has an editing function mode is illustrated in Figures 1 and 2 of the accompanying drawings.

As shown in Figure 1, a pair of record/playback heads (i.e. an A head and a B head) 2A, 2B are mounted at positions mutually angularly spaced by 180° on a rotary drum 1. Two rotary erase heads 3A and 3B are mounted at respective positions angularly spaced by 130° in advance of the record/playback heads 2A, 2B with respect to a direction of rotation (denoted by an arrow a1) of the rotary drum 1.

A magnetic tape 4 is threaded around the outer periphery of the rotary drum 1 and runs in a direction denoted by an arrow a2. The magnetic tape 4 approximately covers a predetermined angle of wrap equal to the spacing between the record/playback heads 2A, 2B.

The record/playback heads 2A and 2B are oriented so as to move slantwise across the magnetic tape 4 so as to form skewed record tracks 5A, 5B adjoining each other alternately. The record/playback heads 2A, 2B are slanted to have azimuth angles of +7° or -7° so as to form the record tracks 5A, 5B in a guardbandless format.

The rotary erase heads 3A and 3B are slanted to have azimuth angles of -20° and +20°, respectively. The rotary erase heads 3A and 3B are mounted at positions offset vertically with respect to the record/playback heads 2A and 2B by an extent corresponding to two tracks. When the two record/playback heads 2A and 2B are recording, signals previously recorded on the record tracks 5A and 5B are first erased by the rotary erase heads 3A and 3B.

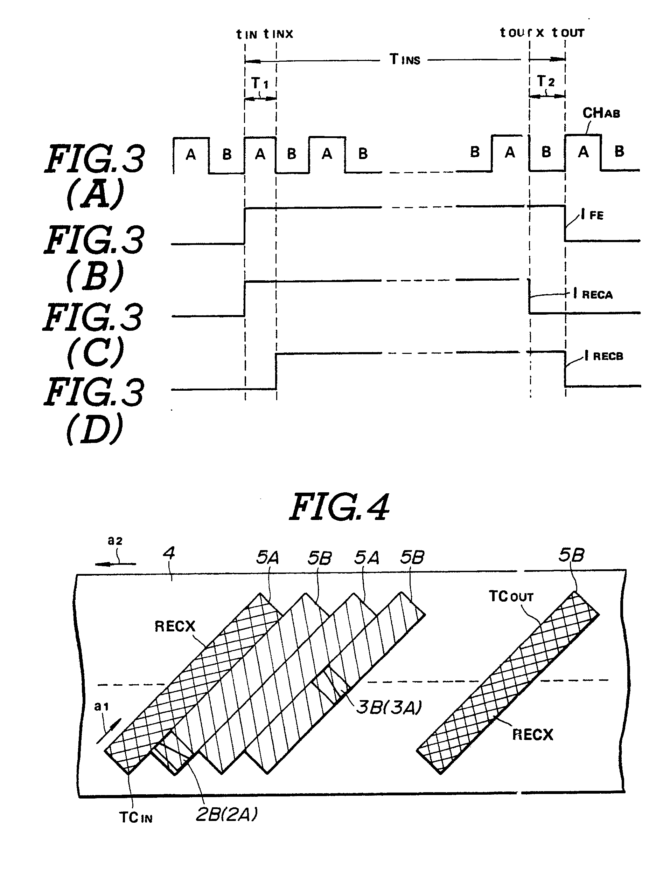

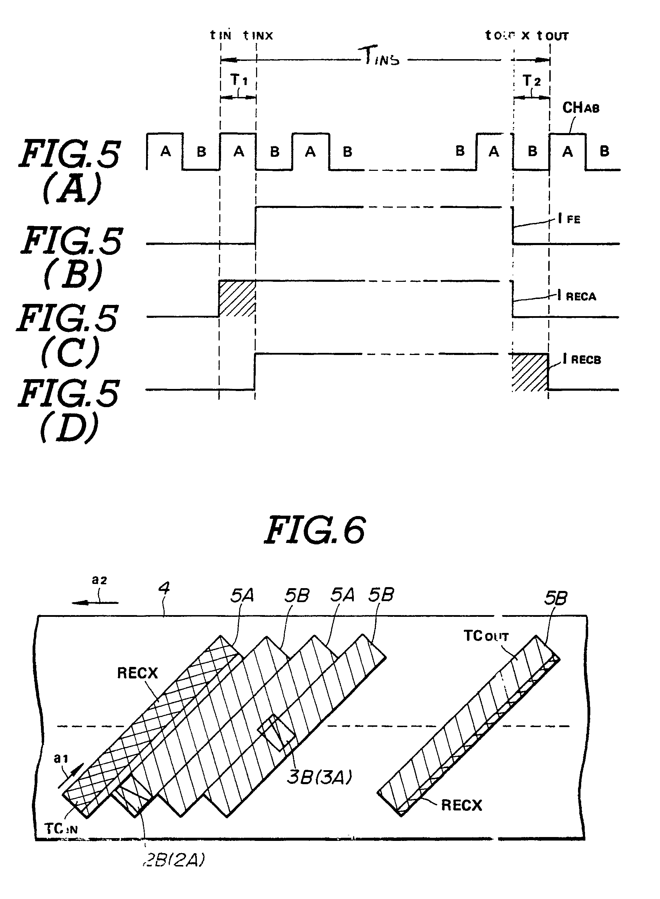

In the construction shown in Figures 1 and 2, the A and B heads (i.e. the record/playback heads 2A, 2B) operate alternately in response to head switchover signals $CH_{AB}$ (Figure 3(A)). When an insertion editing operation is to be carried out, recording currents $I_{RECA}$ and $I_{RECB}$ (Figures 3(C) and Figure 3(D)), are conducted through the A and B heads (i.e. the record/playback heads 2A, 2B), respectively, during an insertion editing interval $T_{INS}$ covering an integral number of tracks (tracks on which one video frame is recorded). On the other hand, an erasing current $I_{FE}$ (Figure 3(B)) is conducted through the two rotary erase heads 3A and 3B over the entire insertion editing interval $T_{INS}$. (More exactly, due to the spatial offset between the record/playback heads 2A and 2B and the rotary erase heads 3A and 3B, the erasing current $I_{FE}$ is conducted through the rotary erase heads 3A and 3B over an erasing period which has the same duration as the insertion editing internal $T_{INS}$, but is offset temporally by a predetermined amount from the insertion editing interval. Thus, strictly speaking, Figure 3(B) is inaccurate in showing the erasing current $I_{FE}$ as having transitions coincident with transitions in the recording currents $I_{RECA}$ and $I_{RECB}$, since the former and latter transitions are in fact offset. Nonetheless, it is considered simpler for the reader to follow the description of Figure 3 (and similar figures appearing later in the description, namely Figure 5, 7 and 9) if the offset is not shown. In this regard, Figure 3 accurately shows the relationship between the various currents from the point of view of positioning of the heads with regard to predetermined tracks (as opposed to time).)

In the magnetic recording/reproducing apparatus shown in Figures 1 and 2, the erasing current $I_{FE}$ flowing through the rotary erase heads 3A and 3B is about twice as great as the recording current so that erasure of low-frequency information components recorded deep in the magnetic tape 4 can be ensured.

However, since the erasing current is relatively strong, magnetic flux "leaks" to adjacent tracks when the magnetic flux generated from the rotary erase heads 3A and 3B is transmitted towards the record tracks 5A and 5B. This phenomenon (referred to as cross-talk or fringe effect) partially erases fringe portions of tracks adjacent to the record tracks 5A and 5B being erased.

The fringe effect deteriorates the picture quality of previously recorded video signals at the editing start point $t_{IN}$ (referred to as "the cut-in point") and at the editing end point $t_{OUT}$ (referred to as "the cut-out point") when an insertion editing operation is carried out on a magnetic tape 4 on which video information has previously been recorded. That is to say, when the insertion editing operation is carried out in such a way that the recorded signal ranging from a track $TC_{IN}$ at the cut-in point $t_{IN}$ to a track $TC_{OUT}$ at the cut-out point $t_{OUT}$ is updated by the insertion of a new recorded signal, e.g. a commercial, an unnecessarily erased part ERA will appear outside of the edge of the cut-in point track $TC_{IN}$ due to the fringe effect of the rotary erase head 3A and an unnecessarily erased part ERB will appear outside of the edge of the cut-out point track $TC_{OUT}$ due to the fringe effect of the rotary erase head 3B. It should be noted that the fringe effect on the tracks between the cut-in track $TC_{IN}$ and the cut-out track $TC_{OUT}$ does not constitute a practical inconvenience since the newly recorded signal overlaps with the original previously recorded signal.

When the insertion editing operation is carried out in this way, the picture quality of the video signals recorded on the track prior to the cut-in point track $TC_{IN}$ and on the track subsequent to the cut-out point track $TC_{OUT}$ is lowered. For example, when still reproduction of these tracks is carried out, only video images of a picture quality lowered to a degree which is impermissible in practice can be reproduced.

Japanese Patent Application Publication No. JP-A-56 98761 (an English language abstract of which appears at Patent Abstracts of Japan, vol. 5, no. 169 (P-86)(841), 28 October 1981) discloses a tape recording apparatus similar to that described above, in which, to suppress fringing effects, the erasing current is attenuated during the first and last tracks of the portion of the tape on which the new video signal is recorded.

An article entitled "Ueberspielen von Bildbandaufzeichnungen" (Re-recording video tape recordings) in Neues aus der Technik 01.11.65, pages 3 and 4, teaches that, in re-recording a new video signal over a previously recorded signal, erasure of the previously recorded signal can be achieved simply (through at the cost of reduction in output power when playback occurs) by increasing the recording current to about 1.5 times a maximum value, instead of using a stationary erase head. The recording current can be increased continuously or, when using a stationary erase head, during the beginning and end of the new video signal.

JP-A-57 10751 (an English language abstract of which appears at Patent Abstracts of Japan, vol. 7, no. 241 (P-232)(1386), 26 October 1983, teaches increasing the signal to noise ratio of an overlapped recording by increasing the recording current over the overlapped portion.

An article entitled "Axially decentred erase head" by S D Cheatham et al, appearing in IBM Technical Disclosure Bulletin, vol. 19, no. 5, October 1976, mentions that, in a helical-scan recording device, axially decentring an erase head will result in prevention of any fringe field from an erase gap disturbing previously recorded data tracks during an erase pass.

According to a first aspect of the invention there is provided a helical scan type video tape recording apparatus having an editing function mode enabling a new video signal to be inserted, during an editing internal between a cut-in point and a cut-out point, on a video signal previously recorded on a video tape, the apparatus comprising:

a rotary head drum;

a rotary video head secured to the rotary head drum for recording a video signal on the video tape in a plurality of skewed video tracks;

recording control means for supplying a recording current of the new video signal to the video head in response to a recording command signal;

a rotary erase head secured to the rotary head drum for erasing a video signal recorded on selected ones of the video tracks, the rotary erase head being positioned to scan the video tracks ahead of the video head by an interval corresponding to a predetermined number of video tracks, and the erase head being disposed to trace the tracks appropriately; and

erasing control means for supplying an erasing current, in response to the recording command signal, to the rotary erase head during a period whilst the erase head is tracing the tracks between the cut-in point and the cut-out point, except during two intervals of said period in which the rotary erase head traces the tracks at the cut-in point and the cut-out point, respectively, when the erasing current is reduced to zero so that erasing flux does not leak to the adjacent track in advance of the cut-in point and to the adjacent track following the cut-out point;

the recording control means being operative to increase the recording current, during intervals of the insertion editing interval in which the rotary video head traces the tracks at the cut-in point and the cut-out point, respectively, to a level greater than a normal level employed during tracing the remainder of the tape between the cut-in and cut-out points.

According to a second aspect of the invention there is provided a helical scan type video tape recording apparatus having an editing function mode enabling a new video signal to be inserted, during an editing internal between a cut-in point and a cut-out point, on a video signal previously recorded on a video tape, the apparatus comprising:

a rotary head drum;

a rotary video head secured to the rotary head drum for recording a video signal on the video tape in a plurality of skewed video tracks;

recording control means for supplying a recording current of the new video signal to the video head in response to a recording command signal;

a rotary erase head secured to the rotary head drum for erasing a video signal recorded on selected ones of the video tracks, the rotary erase head being positioned to scan the video tracks ahead of the video head by an interval corresponding to a predetermined number of video tracks, and the erase head being disposed at a position which is deviated by a predetermined distance from the track in a direction towards the cut-in point; and

erasing control means for supplying an erasing current, in response to the recording command signal, to the rotary erase head during a period whilst the erase head is tracing the tracks between the cut-in point and the cut-out point, except during an interval of said period in which the rotary erase head traces the track at the cut-in point, when the erasing current is reduced to zero so that erasing flux does not leak to the adjacent track in advance of the cut-in point;

the recording control means being operative to increase the recording current, during intervals of the insertion editing interval in which the rotary video head traces the tracks at the cut-in point and the cut-out point, respectively, to a level greater than a normal level employed during tracing the remainder of the tape between the cut-in and cut-out points.

According to a third aspect of the invention there is provided a helical scan type video tape recording apparatus having an editing function mode enabling a new video signal to be inserted, during an editing internal between a cut-in point and a cut-out point, on a video signal previously recorded on a video tape, the apparatus comprising:

a rotary head drum;

a rotary video head secured to the rotary head drum for recording a video signal on the video tape in a plurality of skewed video tracks;

recording control means for supplying a recording current of the new video signal to the video head in response to a recording command signal;

a rotary erase head secured to the rotary head drum for erasing a video signal recorded on selected ones of the video tracks, the rotary erase head being positioned to scan the video tracks ahead of the video head by an interval corresponding to a predetermined number of video tracks, and the erase head being disposed at a position which is deviated by a predetermined distance from the track in a direction towards the cut-out point; and

erasing control means for supplying an erasing current, in response to the recording command signal, to the rotary erase head during a period whilst the erase head is tracing the tracks between the cut-in point and the cut-out point, except during an interval of said period in which the rotary erase head traces the track at the cut-out point, when the erasing current is reduced to zero so that erasing flux does not leak to the adjacent track following the cut-out point;

the recording control means being operative to increase the recording current, during intervals of the insertion editing interval in which the rotary video head traces the tracks at the cut-in point and the cut-out point, respectively, to a level greater than a normal level employed during tracing the remainder of the tape between the cut-in and cut-out points.

Apparatus embodying the invention and described hereinbelow eliminates or at least reduces damage to previously recorded signals on tracks outside of the cut-in and cut-out point tracks due to the fringe effect of the rotary erase head and can carry out an insertion editing operation enabling the recording of an insertion editing signal having a picture quality which is, in practice, adequate or at least improved.

The invention will now be further descibed, by way of illustrative and non-limiting example, with reference to the accompanying drawings, in which:

Figure 1 is a diagram of a rotary drum of a previously proposed magnetic recording/reproducing apparatus;

Figure 2 is a diagram representing the format of tracks on a magnetic tape in the apparatus shown in Figure 1;

Figures 3(a) to 3(D) are signal waveform charts representing erasing and recording currents in the apparatus of Figure 1;

Figure 4 is a diagram representing the format of tracks on a magnetic tape in a magnetic recording/reproducing apparatus according to a first preferred embodiment of the present invention and the positions of heads with respect to the format of the tracks;

Figures 5(A) to 5(B) are signal waveform charts representing erasing and recording currents in the first preferred embodiment;

Figure 6 is a diagram representing the format of tracks on a magnetic tape in a magnetic recording/reproducing apparatus according to a second preferred embodiment of the present invention and the positions of heads with respect to the format of the tracks;

Figures 7(A) to 7(D) are signal waveform charts representing erasing and recording currents in the second preferred embodiment;

Figure 8 is a diagram representing the format of tracks on a magnetic tape in a magnetic recording/reproducing apparatus according to a third preferred embodiment of the present invention;

Figures 9(A) to 9(D) are signal waveform charts representing erasing and recording currents in the third preferred embodiment;

Figure 10 is a diagram representing the format of tracks on a magnetic tape in a magnetic recording/reproducing apparatus according to a fourth preferred embodiment of the present invention;

Figure 11 is a diagram representing the format of tracks on a magnetic tape in a magnetic recording/reproducing apparatus according to a fifth preferred embodiment of the present invention; and

Figure 12 is a simplified circuit block diagram of a magnetic recording/reproducing apparatus according to a sixth preferred embodiment of the present invention.

The basic construction of a rotary drum 1 in a previously proposed magnetic recording/reproducing apparatus and the format in which tracks are recorded on a magnetic tape 4 have been described above with reference to Figures 1 and 2.

In a first preferred embodiment of the present invention, which will now be described with reference to Figures 4 and 5(A) to 5(D), the positional relationship between record/playback heads 2A and 2B and corresponding rotary erase heads 3A and 3B is the same as described above with reference to Figures 1 and 2. The construction of a two-head helical scan video tape recorder (VTR) is also exemplified by US Patent No. US-A-4 390 915, the disclosure of which is hereby incorporated herein by reference.

It should be noted that, although the vertical offset between the heads 2A (2B) and 3A (3B) (an offset in height as viewed from a central axis of rotation of the heads) corresponds to two tracks, this may vary according to the mode or speed of the magnetic recording/reproducing apparatus (e.g., long play mode, short play mode). In practice, the relative spacing thereof to the track width corresponds to three to six tracks.

As shown in Figure 4, the record/playback head 2A traces a corresponding track when an insertion editing operation is initiated and scans obliquely so as to enable a signal to be inserted ("insertion record signal") to be recorded on a previously formed track. On the other hand, the rotary erase heads 3A and 3B erase corresponding tracks.

However, in this embodiment, the erase current $I_{FE}$ (Figure 5(B)) is controlled so as not to flow through the erase heads 3A and 3B during an interval of the erasing period (corresponding to but offset from the insertion editing interval $T_{INS}$) that corresponds to a first one-track interval $T_1$ (starting at the cut-in time $t_{IN}$ and ending at a time $t_{INX}$) of the insertion editing interval $T_{INS}$ and during another interval of the erasing period that corresponds to the last one-track interval $T_2$ (starting at a time $t_{OUTX}$ and ending at the cut-out time $t_{OUT}$) of the insertion editing interval $T_{INS}$, which one-track intervals $T_1$ and $T_2$ occur during the insertion editing operation interval $T_{INS}$ defined by the head change signal $CH_{AB}$ (Figure 5(A)).

The recording current $I_{RECA}$ applied to the A head (i.e. the record/playback head 2A) is increased by a predetermined percentage (e.g. in the region of 20 to 30%), relative to a normal current level, during the first one-track interval $T_1$ starting at the insertion cut-in time $t_{IN}$ as denoted by oblique lines in Figure 5(C), that is for the first track (which is the first of the tracks 5A) of the insertion editing operation interval $T_{INS}$.

Similarly, the recording current $I_{RECB}$ applied to the B head (i.e. the record/playback head 2B) is increased by the same percentage (i.e. in the region of 20 to 30%), relative to a normal current level, during the last one-track interval $T_2$ ending at the cut-out time $t_{OUT}$ as denoted by oblique lines in Figure 5(D), that is for the last track (which is the last of the tracks 5B) of the insertion editing operation interval $T_{INS}$.

Therefore, for the track after the insertion editing operation interval $T_{INS}$ starts at the time $t_{IN}$, the previously recorded signal is not erased, but a video signal is recorded by the A head with the recording current $I_{RECA}$ on an unerased, previously recorded part RECX (Figure 4). The recording current $I_{RECA}$ is increased by the above-mentioned percentage during this track, that is during the first track (the first of the tracks 5A) of the insertion editing operation interval $T_{INS}$. For the remaining tracks 5A of the insertion editing operation interval $T_{INS}$, where the previously recorded video signal has been erased by the erasing current $I_{FE}$, the insertion record signal is recorded by the A head using a recording current $I_{RECA}$ at the normal current level.

For all but the last of the tracks 5B of the insertion editing operation interval $T_{IN}$, where the previously recorded video signal has been erased by the erasing current $I_{FE}$, the insertion record signal is recorded by the B head using a recording current $I_{RECB}$ at the normal current level. For the last track (the last of the tracks 5B) of the insertion editing operation interval $T_{INS}$, where the previously recorded video signal has not been erased by the erase current $I_{FE}$ (Figure 5(B)), the insertion record signal is recorded on an unerased, previously recorded part RECX with a recording current $I_{RECB}$ increased by the above-mentioned percentage with respect to its normal level.

Consequently, the erasing current $I_{FE}$ is suppressed while the cut-in point track $TC_{IN}$ is scanned by the erase heads so that no unnecessarily erased part ERA (Figure 2) due to the fringe effect will appear on the track preceding the cut-in point track $TC_{IN}$. In addition, the recording current $I_{RECA}$ is increased for the cut-in point track $TC_{IN}$ and the insertion record signal is recorded on the previously recorded signal of the cut-in point track $TC_{IN}$, so that the influence of unerased low-frequency components can be reduced significantly relative to a case where the insertion record signal is recorded over a previously recorded signal at the normal recording current level.

The generation of an unnecessarily erased part ERA at the cut-in point due to the fringe effect of the erasing current $I_{FE}$ thus effectively can be prevented.

In addition, since the erasing current $I_{FE}$

through the erase heads is suppressed while the erase heads are scanning the cut-out point track $TC_{OUT}$, no unnecessarily erased part ERB due to the fringe effect will be produced. Furthermore, since the insertion record signal is recorded over the previously recorded cut-out point track $TC_{OUT}$ with an enhanced recording current $I_{RECB}$, the fringe effect can in practice be eliminated.

It should be noted that since the recording current flowing through the record/playback heads 2A and 2B during the respective intervals $T_1$ and $T_2$ is increased by about 20 to 30% with respect to the normal current level, the recording current flowing through the heads exceeds its optimum value. Therefore, a so-called over-modulation phenomenon can occur so that the contours of images on a television monitor becomes unnatural. However, this effect is negligible when compared with the above-described crosstalk or fringe effect.

In the manner described above, the magnetic recording/reproducing apparatus can perform insertion editing without unnecessarily erased previously recorded parts ERA and ERB being caused by the fringe effect due to the flow of erasing current $I_{FE}$ while scanning all of the tracks in the insertion editing operation interval $T_{INS}$.

Figure 6 shows a second preferred embodiment of the present invention. In this embodiment, the position at which each rotary erase head 3A and 3B is mounted on the rotary drum 1 deviates by a predetermined amount (for example, several micrometres) in a direction towards the cut-in point track with respect to the tracks 5A and 5B which the record/playback heads 2A and 2B scan. Such a deviation can be achieved by changing the vertical height (offset spacing) of the rotary erase heads 3A and 3B with respect to the record/playback heads 2A and 2B in the rotary drum 1.

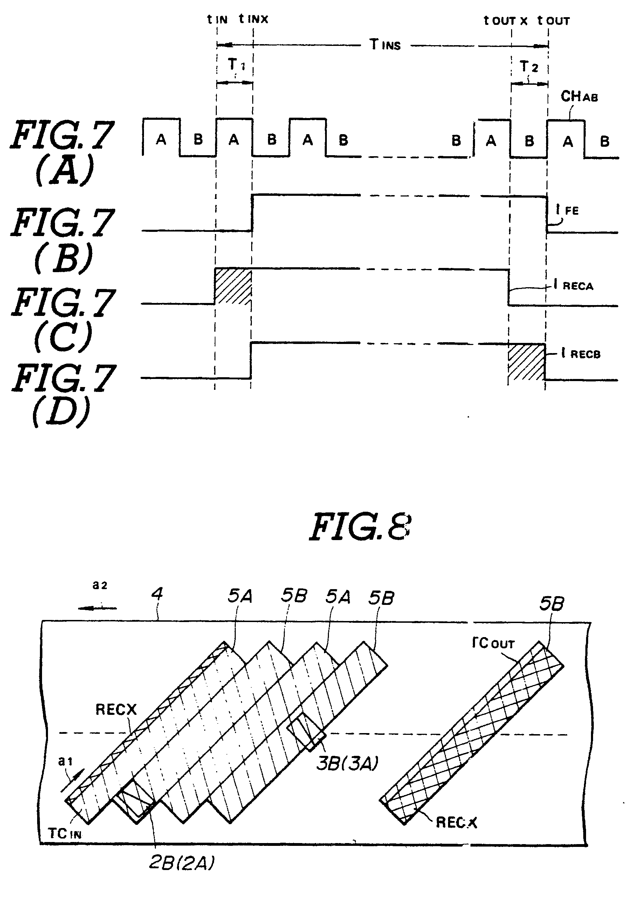

The erasing current $I_{FE}$ is caused not to flow through the erase heads 3A and 3B during the one-track interval of the erasing period (corresponding to the one-track interval $T_1$ of the insertion editing interval $T_{INS}$) during which the erase heads are scanning the cut-in point track $TC_{IN}$, as shown in Figure 7(B). In addition, the erasing current $I_{FE}$ is caused to flow through the erase heads while they are scanning the one-track interval of the erasing period (corresponding to the one-track interval $T_2$ of the insertion editing interval $T_{INS}$) during which the erase heads are scanning the cut-out point track $TC_{OUT}$, as shown in Figure 7(B).

Furthermore, the current level or value of the A head recording current $I_{RECA}$ is increased by the predetermined percentage during the one-track interval $T_1$, after which the level of the A head recording current $I_{RECA}$ is returned to the normal level during the remaining part of the insertion editing operation interval $T_{INS}$, as shown in Figure 7(C).

The current level or value of the B head recording current $I_{RECB}$ during the one-track interval $T_2$ corresponding to the cut-out point track $TC_{OUT}$ is increased by the predetermined percentage, as shown in Figure 7(D). The B head recording current $I_{RECB}$ adopts the normal level during the rest of the insertion editing operation interval $T_{INS}$.

Since the erasing current $I_{FE}$ does not flow during scanning of the erase heads of the one-track interval of the erasing period corresponding to the cut-in point track $TC_{IN}$, the recording signal is recorded on an unerased part RECX, on which the previously recorded signal is unerased, due to the flow of the A head recording current $I_{RECA}$. Consequently, the insertion record signal can be recorded on the cut-in point track $TC_{IN}$ without generation of an unnecessarily erased part ERA due to the fringe effect.

On the other hand, although the erasing current $I_{FE}$ continues to flow during scanning by the erase heads 3A and 3B of the one-track interval of the erasing period corresponding to the cut-out point track $TC_{OUT}$, the erase heads 3A and 3B are, at this time, deviated in the direction towards the cut-in point due to the positions in which they are mounted. Therefore, the fringe effect due to the erasing current $I_{FE}$ does not affect the track subsequent to the cut-out point track $TC_{OUT}$ and an unerased part RECX is left on a trailing edge of the track $TC_{OUT}$. Since the recording current $I_{RECB}$ flowing through the B head having a current level which is increased with respect to the normal current level during scanning of the unerased part RECX, the insertion record signal can rewrite the information on the unerased part RECX up to a practically low frequency.

The insertion record signal thus can be recorded without generation of unnecessarily erased parts ERA and ERB adjacent both the cut-in and cut-out tracks $TC_{IN}$ and $TC_{OUT}$ and without reduction of picture quality in the second preferred embodiment.

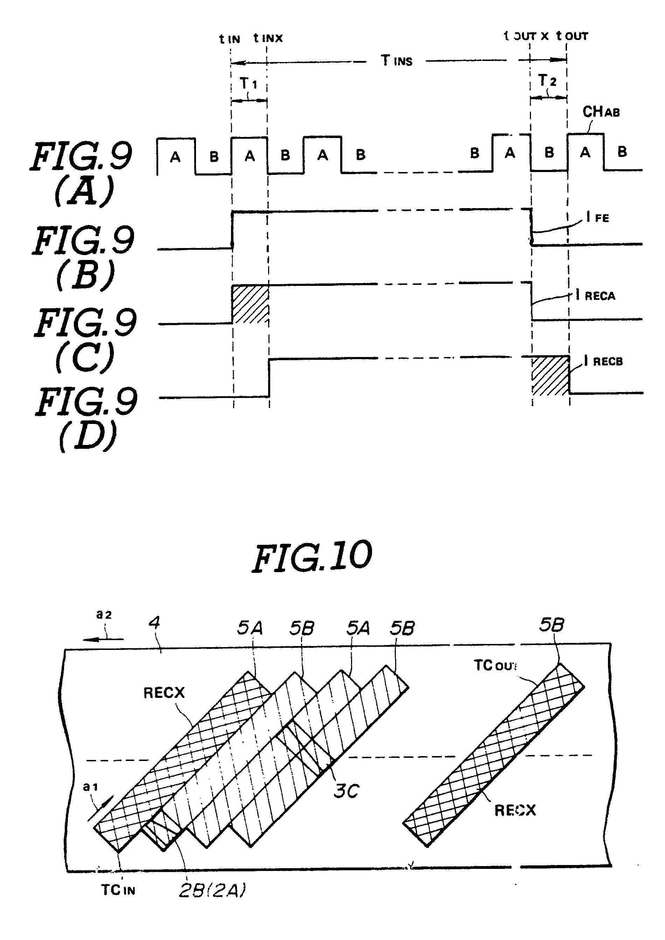

Figure 8 shows a third preferred embodiment of the present invention. In this embodiment, the erase heads 3A and 3B are mounted at positions deviated towards the cut-out point track $TC_{OUT}$.

When the rotary erase head 3A scans the cut-in track $TC_{IN}$, the erasing current $I_{FE}$ is controlled so as to flow through the erase head 3A. On the other hand, when the rotary erase head 3B scans the cut-out point track $TC_{OUT}$, the erase current $I_{FE}$ is controlled so as not to flow therethrough, as shown in Figure 9(B).

Furthermore, when the record/playback head 2A scans the cut-in point track $TC_{IN}$, the insertion record signal is recorded with the A head recording current $I_{RECA}$ increased to a level greater than the normal current level, as shown in Figure 9(C).

When the record/playback head 2B scans the cut-out point track $TC_{OUT}$, as shown in Figure 9(D), the B head recording current $I_{RECB}$ is increased to a level greater than the normal current level.

Since, in this embodiment, the positions at which the erase heads 3A and 3B are mounted deviate towards the direction of the cut-out point, the operation of erasure is carried out in such a manner that an unerased part RECX is left at the leading edge of the cut-in point track $TC_{IN}$. The insertion record signal is recorded on the previously recorded signal on the unerased part RECX by means of the A head recording current $I_{RECA}$ whose level is increased to be greater than the normal current level.

In addition, since the erasing current $I_{FE}$ is caused not to flow through the corresponding erase head during scanning of the cut-out point track $TC_{OUT}$, the erasure operation is carried out in such a manner that an unerased part RECX is left on the cut-out track $TC_{OUT}$ and the insertion recording current thereafter is recorded over the previously recorded signal on the unerased part RECX by means of the B head recording current $I_{RECB}$ of increased current level.

In the third preferred embodiment, the fringe effect due to the erasing current $I_{FE}$ which would be produced on a track adjacent to each of the cut-in and cut-out tracks $TC_{IN}$ and $TC_{OUT}$ can effectively be avoided. In addition, since recording of the insertion record signal on the cut-in point track $TC_{IN}$ and the cut-out point track $TC_{OUT}$ is carried out by means of a recording current increased to a level greater than the normal current level, rewriting of the insertion record signal on the unerased part of the already recorded video signal can be carried out at a level which is adequate in practice up to the lower frequency component.

The invention can of course be embodied in other ways than those disclosed above by way of example. For instance, although control of the erasing current $I_{FE}$ and control of the A head recording current $I_{RECA}$ and the B head recording current $I_{RECB}$ are carried out during scanning over one track (normally a one-field video signal is recorded) at the times of the cut-in point and cut-out point, the same effect can be achieved if processing for a plurality of tracks is carried out.

In addition, although in the above-described preferred embodiments the present invention is applied to a magnetic tape recording/reproducing apparatus in which a pair of rotary erase heads 3A and 3B are mounted so as to correspond to a pair of record/playback heads 2A and 2B, the present invention is applicable also to magnetic tape recording/reproducing apparatus in which a single rotary erase head 3C causes mutually adjoining A and B head tracks 5A and 5B to be erased, as can be appreciated from Figure 10.

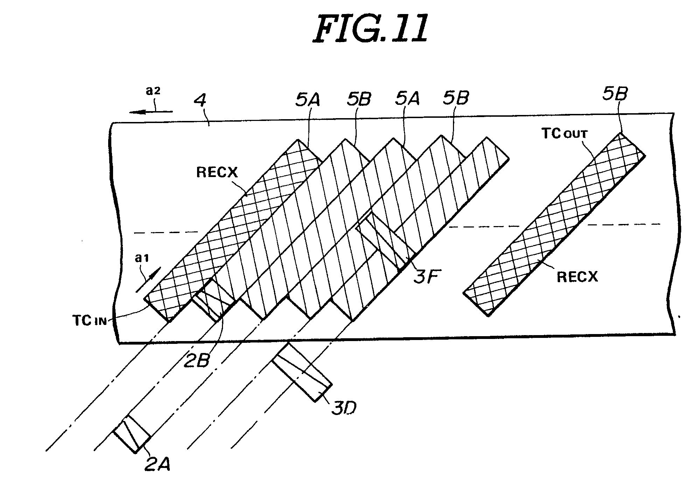

Furthermore, as shown in Figure 11, it is possible to employ two erase heads 3D and 3F that enable a mutually adjoining pair of tracks 5A and 5B to be erased, respectively, one of the pair of tracks which has been erased by means of the one erase head 3F (and 3D) being further erased by means of the other erase head 3D (and 3F). The present invention is applicable also to this case.

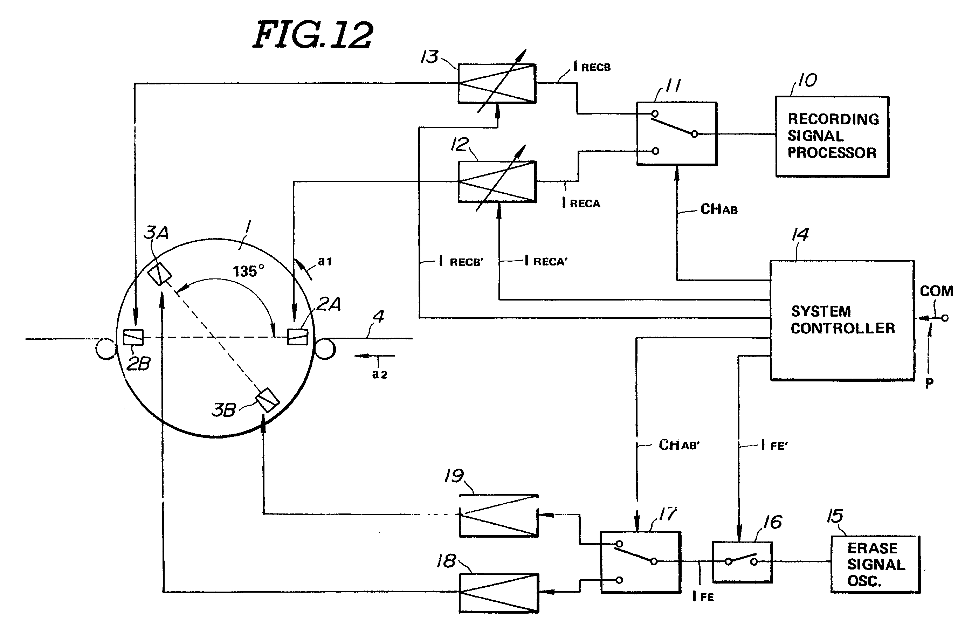

Figure 12 shows a specific example of the electrical circuit configuration that may be employed in a magnetic tape recording/reproducing apparatus embodying the present invention. A recording signal processing circuit 10 combines a luminance signal and chrominance signal to produce video signals to be recorded. The video signals are supplied to the recording heads 2A and 2B via recording head amplifiers 12 and 13. The video signals are branched into two by means of a switch 11, which is controlled by the head switching signal $CH_{AB}$, so as to be sent to the respective amplifiers 12 and 13. The levels of the currents $I_{RECA}$ and $I_{RECB}$ of the branched recording signals are controlled by means of gain control functions of the amplifiers 12 and 13 during the above-described intervals $T_1$ and $T_2$.

When insertion editing is required, a command signal P for an insertion editing operation is applied to an input terminal COM which is connected to a system controller 14.

The gain control functions of the amplifiers 12 and 13 are controlled by means of control signals $I_{RECA}'$, $I_{RECB}'$ derived from the system controller 14.

An oscillation output from an erase signal oscillator 15 is sent to the erase heads 3A, 3B via a gating circuit 16, a switch 17, and amplifiers 18 and 19. In the gate circuit 16, the erase current $I_{FE}$ is formed in response to a control signal $I_{FE}'$ derived from the system controller 14 for providing the above-described unerased part. The switch 17 switches the signal $I_{FE}$ to the heads 3A and 3B in response to the head switching signal $CH_{AB}$.

## Claims

1. A helical scan type video tape recording apparatus having an editing function mode enabling a new video signal to be inserted, during an editing internal ($T_{INS}$) between a cut-in point ($t_{IN}$) and a cut-out point ($t_{OUT}$), on a video signal previously recorded on a video tape (4), the apparatus comprising:

    a rotary head drum (1);

    a rotary video head (2A,2B) secured to the rotary head drum (1) for recording a video signal on the video tape (4) in a plurality of skewed video tracks (5A,5B);

recording control means (10 to 14) for supplying a recording current ($I_{RECA}$, $I_{RECB}$) of the new video signal to the video head (2A,2B) in response to a recording command signal (P);

a rotary erase head (3A,3B) secured to the rotary head drum (1) for erasing a video signal recorded on selected ones of the video tracks (5A,5B), the rotary erase head (3A,3B) being positioned to scan the video tracks ahead of the video head (2A,2B) by an interval corresponding to a predetermined number of video tracks, and the erase head (3A,3B) being disposed to trace the tracks (5A,5B) appropriately; and

erasing control means (14 to 19) for supplying an erasing current ($I_{FE}$), in response to the recording command signal (P), to the rotary erase head (3A,3B) during a period whilst the erase head is tracing the tracks between the cut-in point ($t_{IN}$) and the cut-out point ($t_{OUT}$), except during two intervals of said period in which the rotary erase head (3A,3B) traces the tracks ($TC_{IN}$, $TC_{OUT}$) at the cut-in point ($t_{IN}$) and the cut-out point ($t_{OUT}$), respectively, when the erasing current is reduced to zero so that erasing flux does not leak to the adjacent track in advance of the cut-in point and to the adjacent track following the cut-out point;

the recording control means being operative to increase the recording current ($I_{RECA}$, $I_{RECB}$), during intervals (T1,T2) of the insertion editing interval ($T_{INS}$) in which the rotary video head (2A, 2B) traces the tracks ($TC_{IN}$, $TC_{OUT}$) at the cut-in point and the cut-out point, respectively, to a level greater than a normal level employed during tracing the remainder of the tape (4) between the cut-in and cut-out points.

2. A helical scan type video tape recording apparatus having an editing function mode enabling a new video signal to be inserted, during an editing internal ($T_{INS}$) between a cut-in point ($t_{IN}$) and a cut-out point ($t_{OUT}$), on a video signal previously recorded on a video tape (4), the apparatus comprising:

a rotary head drum (1);

a rotary video head (2A,2B) secured to the rotary head drum (1) for recording a video signal on the video tape (4) in a plurality of skewed video tracks (5A,5B);

recording control means (10 to 14) for supplying a recording current ($I_{RECA}$, $I_{RECB}$) of the new video signal to the video head (2A,2B) in response to a recording command signal (P);

a rotary erase head (3A,3B) secured to the rotary head drum (1) for erasing a video signal recorded on selected ones of the video tracks (5A,5B), the rotary erase head (3A,3B) being positioned to scan the video tracks ahead of the video head (2A,2B) by an interval corresponding to a predetermined number of video tracks, and the erase head (3A,3B) being disposed at a position which is deviated by a predetermined distance from the track in a direction towards the cut-in point ($t_{IN}$); and

erasing control means (14 to 19) for supplying an erasing current ($I_{FE}$), in response to the recording command signal (P), to the rotary erase head (3A,3B) during a period whilst the erase head is tracing the tracks between the cut-in point ($t_{IN}$) and the cut-out point ($t_{OUT}$), except during an interval of said period in which the rotary erase head (3A,3B) traces the track ($TC_{IN}$) at the cut-in point ($t_{IN}$), when the erasing current is reduced to zero so that erasing flux does not leak to the adjacent track in advance of the cut-in point;

the recording control means being operative to increase the recording current ($I_{RECA}$, $I_{RECB}$), during intervals (T1,T2) of the insertion editing interval ($T_{INS}$) in which the rotary video head (2A, 2B) traces the tracks ($TC_{IN}$, $TC_{OUT}$) at the cut-in point and the cut-out point, respectively, to a level greater than a normal level employed during tracing the remainder of the tape (4) between the cut-in and cut-out points.

3. A helical scan type video tape recording apparatus having an editing function mode enabling a new video signal to be inserted, during an editing internal ($T_{INS}$) between a cut-in point ($t_{IN}$) and a cut-out point ($t_{OUT}$), on a video signal previously recorded on a video tape (4), the apparatus comprising:

a rotary head drum (1);

a rotary video head (2A,2B) secured to the rotary head drum (1) for recording a video signal on the video tape (4) in a plurality of skewed video tracks (5A,5B);

recording control means (10 to 14) for supplying a recording current ($I_{RECA}$, $I_{RECB}$) of the new video signal to the video head (2A,2B) in response to a recording command signal (P);

a rotary erase head (3A,3B) secured to the rotary head drum (1) for erasing a video signal recorded on selected ones of the video tracks (5A,5B), the rotary erase head (3A,3B) being positioned to scan the video tracks ahead of the video head (2A,2B) by an interval corresponding to a predetermined number of video tracks, and the erase head (3A,3B) being disposed at a position which is deviated by a predetermined distance from the track in a direction towards the cut-out point (t$_{OUT}$); and

erasing control means (14 to 19) for supplying an erasing current (I$_{FE}$), in response to the recording command signal (P), to the rotary erase head (3A,3B) during a period whilst the erase head is tracing the tracks between the cut-in point (t$_{IN}$) and the cut-out point (t$_{OUT}$), except during an interval of said period in which the rotary erase head (3A,3B) traces the track (TC$_{OUT}$) at the cut-out point (t$_{OUT}$), when the erasing current is reduced to zero so that erasing flux does not leak to the adjacent track following the cut-out point;

the recording control means being operative to increase the recording current (I$_{RECA}$, I$_{RECB}$), during intervals (T1,T2) of the insertion editing interval (T$_{INS}$) in which the rotary video head (2A, 2B) traces the tracks (TC$_{IN}$, TC$_{OUT}$) at the cut-in point and the cut-out point, respectively, to a level greater than a normal level employed during tracing the remainder of the tape (4) between the cut-in and cut-out points.

**Revendications**

1. Dispositif d'enregistrement à bande vidéo du type à balayage hélicoïdal comportant un mode fonction d'édition qui permet à un nouveau signal vidéo d'être inséré pendant un intervalle d'édition (T$_{INS}$), entre un point de connexion (t$_{IN}$) et un point de déconnexion (t$_{OUT}$), sur un signal vidéo précédemment enregistré sur une bande vidéo (4), le dispositif comprenant :

un tambour à têtes rotatives (1) ;

une tête vidéo rotative (2A, 2B) qui est fixée au tambour à têtes rotatives (1) pour enregistrer un signal vidéo sur la bande vidéo (4) dans une pluralité de pistes vidéo obliques (5A, 5B) ;

un moyen de commande d'enregistrement (10 à 14) qui permet d'acheminer un courant d'enregistrement (I$_{RECA}$, I$_{RECB}$) du nouveau signal vidéo à la tête vidéo (2A, 2B) en réponse à un signal de commande d'enregistrement (P) ;

une tête d'effacement rotative (3A, 3B) qui est fixée au tambour à têtes rotatives (1) pour effacer un signal vidéo enregistré sur certaines pistes sélectionnées parmi les pistes vidéo (5A, 5B), la tête d'effacement rotative (3A, 3B) étant positionnée de manière à balayer les pistes vidéo en avant de la tête vidéo (2A, 2B) d'un intervalle qui correspond à un nombre prédéterminé de pistes vidéo et la tête d'effacement (3A, 3B) étant disposée afin de suivre les pistes (5A, 5B) de manière appropriée ; et

un moyen de commande d'effacement (14 à 19) qui permet d'acheminer un courant d'effacement (I$_{FE}$), en réponse au signal de commande d'enregistrement (P), à la tête d'effacement rotative (3A, 3B) pendant une période au cours de laquelle la tête d'effacement suit les pistes entre le point de connexion (T$_{IN}$) et le point de déconnexion (T$_{OUT}$), à l'exception de deux intervalles de ladite période au cours desquels la tête d'effacement rotative (3A, 3B) suit les pistes (TC$_{IN}$, TC$_{OUT}$) au niveau respectivement du point de connexion (T$_{IN}$) et du point de déconnexion (T$_{OUT}$), lorsque le courant d'effacement est réduit jusqu'à zéro de telle sorte que le flux d'effacement ne fuie pas jusqu'à une piste adjacente qui est située en avant du point de connexion et jusqu'à une piste adjacente qui suit le point de déconnexion ;

le moyen de commande d'enregistrement pouvant être actionné pour augmenter le courant d'enregistrement (I$_{RECA}$, I$_{RECB}$) pendant des intervalles (T$_1$, T$_2$) de l'intervalle d'édition pour insertion (T$_{INS}$) au cours desquels la tête vidéo rotative (2A, 2B) suit les pistes respectivement (TC$_{IN}$, TC$_{OUT}$) au niveau du point de connexion et du point de déconnexion, jusqu'à un niveau supérieur à un niveau normal utilisé pendant le suivi du reste de la bande entre les points de connexion et de déconnexion.

2. Dispositif d'enregistrement à bande vidéo du type à balayage hélicoïdal comportant un mode fonction d'édition qui permet à un nouveau signal vidéo d'être inséré pendant un intervalle d'édition (T$_{INS}$), entre un point de connexion (t$_{IN}$) et un point de déconnexion (t$_{OUT}$), sur un signal vidéo précédemment enregistré sur une bande vidéo (4), le dispositif comprenant :

un tambour à têtes rotatives (1) ;

une tête vidéo rotative (2A, 2B) qui est fixée au tambour à têtes rotatives (1) pour enregistrer un signal vidéo sur la bande vidéo (4) dans une pluralité de pistes vidéo obliques (5A, 5B) ;

un moyen de commande d'enregistrement (10 à 14) qui permet d'acheminer un courant d'enregistrement (I$_{RECA}$, I$_{RECB}$) du nouveau signal vidéo à la tête vidéo (2A, 2B) en réponse à un signal de commande d'enregistrement (P) ;

une tête d'effacement rotative (3A, 3B) qui est fixée au tambour à têtes rotatives (1) pour effacer un signal vidéo enregistré sur certaines pistes sélectionnées parmi les pistes vidéo (5A, 5B), la tête d'effacement rotative (3A, 3B) étant positionnée de manière à balayer les pistes vidéo en avant de la tête vidéo (2A, 2B) d'un intervalle qui correspond à un nombre prédéterminé de pistes vidéo et la tête d'effacement (3A, 3B) étant disposée en une position qui est déviée d'une distance prédéterminée par rapport à la piste suivant une direction qui va vers le point de connexion ($T_{IN}$) ; et

un moyen de commande d'effacement (14 à 19) qui permet d'acheminer un courant d'effacement ($I_{FE}$), en réponse au signal de commande d'enregistrement (P), à la tête d'effacement rotative (3A, 3B) pendant une période au cours de laquelle la tête d'effacement suit les pistes entre le point de connexion ($t_{IN}$) et le point de déconnexion ($t_{OUT}$), à l'exception d'un intervalle de ladite période au cours duquel la tête d'effacement rotative (3A, 3B) suit les pistes ($TC_{IN}$) au niveau du point de connexion ($t_{IN}$), lorsque le courant d'effacement est réduit jusqu'à zéro de telle sorte que le flux d'effacement ne fuie pas jusqu'à une piste adjacente qui est située en avant du point de connexion ;

le moyen de commande d'enregistrement pouvant être actionné pour augmenter le courant d'enregistrement ($I_{RECA}$, $I_{RECB}$), pendant des intervalles ($T_1$, $T_2$) de l'intervalle d'édition pour insertion ($T_{INS}$) au cours desquels la tête vidéo rotative (2A, 2B) suit les pistes ($TC_{IN}$, $TC_{OUT}$) respectivement au niveau du point de connexion et du point de déconnexion, jusqu'à un niveau supérieur à un niveau normal utilisé pendant le suivi du reste de la bande (4) entre les points de connexion et de déconnexion.

3. Dispositif d'enregistrement à bande vidéo du type à balayage hélicoïdal comportant un mode fonction d'édition qui permet à un nouveau signal vidéo d'être inséré pendant un intervalle d'édition ($T_{INS}$), entre un point de connexion ($t_{IN}$) et un point de déconnexion ($t_{OUT}$), sur un signal vidéo précédemment enregistré sur une bande vidéo (4), le dispositif comprenant :

un tambour à têtes rotatives (1) ;

une tête vidéo rotative (2A, 2B) qui est fixée au tambour à têtes rotatives (1) pour enregistrer un signal vidéo sur la bande vidéo (4) dans une pluralité de pistes vidéo obliques (5A, 5B) ;

un moyen de commande d'enregistrement (10 à 14) qui permet d'acheminer un courant d'enregistrement ($I_{RECA}$, $I_{RECB}$) du nouveau signal vidéo à la tête vidéo (2A, 2B) en réponse à un signal de commande d'enregistrement (P) ;

une tête d'effacement rotative (3A, 3B) qui est fixée au tambour à têtes rotatives (1) pour effacer un signal vidéo enregistré sur certaines pistes sélectionnées (5A, 5B) parmi les pistes vidéo, la tête d'effacement rotative (3A, 3B) étant positionnée de manière à balayer les pistes vidéo en avant de la tête vidéo (2A, 2B) d'un intervalle qui correspond à un nombre prédéterminé de pistes vidéo et la tête d'effacement (3A, 3B) étant disposée en une position qui est déviée d'une distance prédéterminée par rapport à la piste suivant une direction qui va vers le point de déconnexion ($t_{OUT}$) ; et

un moyen de commande d'effacement (14 à 19) qui permet d'acheminer un courant d'effacement ($I_{FE}$), en réponse au signal de commande d'enregistrement (P), à la tête d'effacement rotative (3A, 3B) pendant une période au cours de laquelle la tête d'effacement suit les pistes entre le point de connexion ($t_{IN}$) et le point de déconnexion ($t_{OUT}$), à l'exception d'un intervalle de ladite période au cours duquel la tête d'effacement rotative (3A, 3B) suit les pistes ($TC_{OUT}$) au niveau du point de déconnexion ($t_{OUT}$), lorsque le courant d'effacement est réduit jusqu'à zéro de telle sorte que le flux d'effacement ne fuie pas jusqu'à une piste adjacente qui est située en avant du point de déconnexion ;

le moyen de commande d'enregistrement pouvant être actionné pour augmenter le courant d'enregistrement ($I_{RECA}$, $I_{RECB}$), pendant des intervalles (T1, T2) de l'intervalle d'édition pour insertion ($T_{INS}$) au cours desquels la tête vidéo rotative (2A, 2B) suit les pistes respectivement ($TC_{IN}$, $TC_{OUT}$) au niveau du point de connexion et du point de déconnexion, jusqu'à un niveau supérieur à un niveau normal utilisé pendant le suivi du reste de la bande (4) entre les points de connexion et de déconnexion.

**Patentansprüche**

1. Videomagnetband-Aufzeichnungsgerät für das Schrägspurverfahren, welches Aufzeichnungsgerät in einer Bandschnittbetriebsart arbeiten kann, die es gestattet, während eines Bandschnitt-Intervalls ($T_{INS}$) ein neues Videosignal zwischen einem Einschneidepunkt ($t_{IN}$) und einem Ausschneidepunkt ($t_{OUT}$) in ein Videosignal einzufügen, das zuvor auf einem Videomagnetband (4) aufgezeichnet ist, welches Aufzeichnungsgerät umfaßt:

eine Drehkopftrommel (19,

einen drehenden Videokopf (2A, 2B), der an der Drehkopftrommel (1) befestigt ist, zum Aufzeichnen eines Videosignals auf dem Videomagnetband (4) in einer Vielzahl von schräglaufenden Videospuren (5A, 5B),

Aufzeichnungssteuermittel (10 bis 14) zum Liefern eines Aufzeichnungsstroms ($I_{RECA}$, $I_{RECB}$) des neuen Videosignals an den Videokopf (2A, 2B) in Reaktion auf Aufzeichungsbefehlssignal (P),

einen drehenden Löschkopf (3A, 3B), der an der Drehkopftrommel (1) befestigt ist, zum Löschen eines Videosignals, das in einer ausgewählten der Videospuren (5A, 5B) aufgezeichnet ist, wobei der drehende Löschkopf (3A, 3B) so angeordnet ist, daß er die Videospuren um ein Intervall, das einer vorbestimmten Anzahl von Videospuren entspricht, vor dem Videokopf (2A, 2B) überläuft, und wobei der Löschkopf (3A, 3B) so angeordnet ist, daß er die Spuren (5A, 5B) in geeigneter Weise verfolgt, und

Löschsteuermittel (15 bis 19) zum Liefern eines Löschstroms ($I_{FE}$) in Reaktion auf das Aufzeichnungsbefehlssignal (P) an den drehenden Löschkopf (3A, 3B) während einer Periode, während welcher der Löschkopf die Spuren zwischen dem Einschneidepunkt ($t_{IN}$) und dem Ausschneidepunkt ($t_{OUT}$) verfolgt, mit Ausnahme während zweier Intervalle der Periode, in welchen der drehende Löschkopf (3A, 3B) Spuren ($TC_{IN}$, $TC_{OUT}$) bei dem Einschneidepunkt ($t_{IN}$) bzw. dem Ausschneidepunkt ($t_{OUT}$) verfolgt, wenn der Löschstrom auf Null reduziert ist, so daß kein Löschstreufluß auf die benachbarte Spur vor dem Einschneidepunkt und die benachbarte Spur, die auf den Ausschneidepunkt folgt, einwirken kann,

wobei die Aufzeichnungssteuermittel wirksam sind, um den Aufzeichnungsstrom ($I_{RECA}$, $I_{RECB}$) während Intervallen (T1, T2) des Bandschnitt-Intervalls ($T_{INS}$), in welchem der drehende Videokopf (2A, 2B) die Spuren ($TC_{IN}$, $TC_{OUT}$) bei dem Einschneidepunkt bzw. dem Ausschneidepunkt verfolgt, auf einen Pegel anzuheben, der größer als ein normaler Pegel ist, welcher während des Verfolgens des restlichen Teils des Videomagnetbandes (4) zwischen den Einschneide- und Ausschneidepunkten benutzt wird.

2. Videomagnetband-Aufzeichnungsgerät für das Schrägspurverfahren, welches Aufzeichnungsgerät in einer Bandschnittbetriebsart arbeiten kann, die es gestattet, während eines Bandschnitt-Intervalls ($T_{INS}$) ein neues Videosignal zwischen einem Einschneidepunkt ($t_{IN}$) und einem Ausschneidepunkt ($t_{OUT}$) in ein Videosignal einzufügen, das zuvor auf einem Videomagnetband (4) aufgezeichnet ist, welches Aufzeichnungsgerät umfaßt:

eine Drehkopftrommel (19,

einen drehenden Videokopf (2A, 2B), der an der Drehkopftrommel (1) befestigt ist, zum Aufzeichnen eines Videosignals auf dem Videomagnetband (4) in einer Vielzahl von schräglaufenden Videospuren (5A, 5B),

Aufzeichnungssteuermittel (10 bis 14) zum Liefern eines Aufzeichnungsstroms ($I_{RECA}$, $I_{RECB}$) des neuen Videosignals an den Videokopf (2A, 2B) in Reaktion auf Aufzeichungsbefehlssignal (P),

einen drehenden Löschkopf (3A, 3B), der an der Drehkopftrommel (1) befestigt ist, zum Löschen eines Videosignals, das in einer ausgewählten der Videospuren (5A, 5B) aufgezeichnet ist, wobei der drehende Löschkopf (3A, 3B) so angeordnet ist, daß er die Videospuren um ein Intervall, das einer vorbestimmten Anzahl von Videospuren entspricht, vor dem Videokopf (2A, 2B) überläuft, und wobei der Löschkopf (3A, 3B) so angeordnet ist, daß er die Spuren (5A, 5B) in geeigneter Weise verfolgt, und

Löschsteuermittel (15 bis 19) zum Liefern eines Löschstroms ($I_{FE}$) in Reaktion auf das Aufzeichnungsbefehlssignal (P) an den drehenden Löschkopf (3A, 3B) während einer Periode, während welcher der Löschkopf die Spuren zwischen dem Einschneidepunkt ($t_{IN}$) und dem Ausschneidepunkt ($t_{OUT}$) verfolgt, mit Ausnahme während eines Intervalls der Periode, in welchen der drehende Löschkopf (3A, 3B) eine Spur ($TC_{IN}$) bei dem Einschneidepunkt ($t_{IN}$) verfolgt, wenn der Löschstrom auf Null reduziert ist, so daß kein Löschstreufluß auf die benachbarte Spur vor dem Einschneidepunkt einwirken kann,

wobei die Aufzeichnungssteuermittel wirksam sind, um den Aufzeichnungsstrom ($I_{RECA}$, $I_{RECB}$) während Intervallen (T1, T2) des Bandschnitt-Intervalls ($T_{INS}$), in welchem der drehende Videokopf (2A, 2B) die Spuren $TC_{IN}$, $TC_{OUT}$) bei dem Einschneidepunkt bzw. dem Ausschneidepunkt verfolgt, auf einen Pegel anzuheben, der größer als ein normaler Pegel ist, welcher während des Verfolgens des restlichen Teils des Videomagnetbandes (4) zwischen den Einschneide- und Ausschneidepunkten benutzt wird.

3. Videomagnetband-Aufzeichnungsgerät für das Schrägspurverfahren, welches Aufzeichnungsgerät in einer Bandschnittbetriebsart arbeiten kann, die es gestattet, während eines Bandschnitt-Intervalls ($T_{INS}$) ein neues Videosignal zwischen einem Einschneidepunkt ($t_{IN}$) und einem Ausschneidepunkt ($t_{OUT}$) in ein Videosignal einzufügen, das zuvor auf einem Videomagnetband (4) aufgezeichnet ist, welches Aufzeichnungsgerät umfaßt:

eine Drehkopftrommel (19,

einen drehenden Videokopf (2A, 2B), der an der Drehkopftrommel (1) befestigt ist, zum Aufzeichnen eines Videosignals auf dem Videomagnetband (4) in einer Vielzahl von schräglaufenden Videospuren (5A, 5B),

Aufzeichnungssteuermittel (10 bis 14) zum Liefern eines Aufzeichnungsstroms ($I_{RECA}$, $I_{RECB}$) des neuen Videosignals an den Videokopf (2A, 2B) in Reaktion auf Aufzeichungsbefehlssignal (P),

einen drehenden Löschkopf (3A, 3B), der an der Drehkopftrommel (1) befestigt ist, zum Löschen eines Videosignals, das in einer ausgewählten der Videospuren (5A, 5B) aufgezeichnet ist, wobei der drehende Löschkopf (3A, 3B) so angeordnet ist, daß er die Videospuren um ein Intervall, das einer vorbestimmten Anzahl von Videospuren entspricht, vor dem Videokopf (2A, 2B) überläuft, und wobei der Löschkopf (3A, 3B) in einer Position angeordnet ist, die um eine vorbestimmte Distanz von der Spur in einer Richtung zu dem Ausschneidepunkt ($t_{OUT}$) abweicht, und

Löschsteuermittel (15 bis 19) zum Liefern eines Löschstroms ($I_{FE}$) in Reaktion auf das Aufzeichnungsbefehlssignal (P) an den drehenden Löschkopf (3A, 3B) während einer Periode, während welcher der Löschkopf die Spuren zwischen dem Einschneidepunkt ($t_{IN}$) und dem Ausschneidepunkt ($t_{OUT}$) verfolgt, mit Ausnahme während eines Intervall der Periode, in welcher der drehende Löschkopf (3A, 3B) eine Spur ($TC_{OUT}$) bei dem Ausschneidepunkt ($t_{OUT}$) verfolgt, wenn der Löschstrom auf Null reduziert ist, so daß kein Löschstreufluß auf die benachbarte Spur, die auf den Ausschneidepunkt folgt, einwirken kann,

wobei die Aufzeichnungssteuermittel wirksam sind, um den Aufzeichnungsstrom ($I_{RECA}$, $I_{RECB}$) während Intervallen (T1, T2) des Bandschnitt-Intervalls ($T_{INS}$), in welchem der drehende Videokopf (2A, 2B) die Spuren $TC_{IN}$, $TC_{OUT}$) bei dem Einschneidepunkt bzw. dem Ausschneidepunkt verfolgt, auf einen Pegel anzuheben, der größer als ein normaler Pegel ist, welcher während des Verfolgens des restlichen Teils des Videomagnetbandes (4) zwischen den Einschneide- und Ausschneidepunkten benutzt wird.

EP 0 225 733 B1

# FIG. 1

# FIG.2

EP 0 225 733 B1

FIG.3
(A)

FIG.3
(B)

FIG.3
(C)

FIG.3
(D)

FIG.4

EP 0 225 733 B1

FIG.5
(A)

FIG.5
(B)

FIG.5
(C)

FIG.5
(D)

FIG.6

FIG.7
(A)

FIG.7
(B)

FIG.7
(C)

FIG.7
(D)

$t_{IN}$  $t_{INX}$

$T_{INS}$

$t_{OUT X}$  $t_{OUT}$

$T_1$

$T_2$

$CH_{AB}$

A | B | A | B | A | B    B | A | B | A | B

$l_{FE}$

$l_{RECA}$

$l_{RECB}$

FIG.8

a2

4    5A    5B    5A    5B                    5B

$TC_{OUT}$

RECX

3B(3A)

a1

$TC_{IN}$

REC X

2B(2A)

FIG.9
(A)

FIG.9
(B)

FIG.9
(C)

FIG.9
(D)

FIG.10

FIG.11

EP 0 225 733 B1

FIG.12